(19) Europäisches Patentamt
European Patent Office
Office européen des brevets

(11) **EP 4 722 770 A1**

(12) **EUROPEAN PATENT APPLICATION**
published in accordance with Art. 153(4) EPC

(43) Date of publication:
08.04.2026 Bulletin 2026/15

(21) Application number: 24815107.8

(22) Date of filing: 07.05.2024

(51) International Patent Classification (IPC):
*G02B 6/02* (2006.01)

(52) Cooperative Patent Classification (CPC):
G02B 6/02

(86) International application number:
PCT/JP2024/016999

(87) International publication number:
WO 2024/247623 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.06.2023 JP 2023091573

(71) Applicant: Sumitomo Electric Industries, Ltd.
Osaka-shi, Osaka 541-0041 (JP)

(72) Inventors:
• SAKUMA Hirotaka
  Osaka-shi, Osaka 541-0041 (JP)

• SUGANUMA Takahiro
  Osaka-shi, Osaka 541-0041 (JP)
• HARUNA Tetsuya
  Osaka-shi, Osaka 541-0041 (JP)
• KOBAYASHI Yuto
  Osaka-shi, Osaka 541-0041 (JP)
• HAYASHI Tetsuya
  Osaka-shi, Osaka 541-0041 (JP)
• HASEGAWA Takemi
  Osaka-shi, Osaka 541-0041 (JP)

(74) Representative: TBK
Bavariaring 4-6
80336 München (DE)

(54) **MULTICORE OPTICAL FIBER**

(57) A multicore optical fiber is made of silica-based glass. The multicore optical fiber includes a plurality of cores containing one or more kinds of elements among an alkali metal element group consisting of an alkali metal element and alkaline-earth metal element, and a cladding that surrounds the plurality of cores, and has a refractive index lower than a refractive index of the plurality of cores. All adjacent first cores and second cores among the plurality of cores have refractive indexes different from each other. A difference between a maximum value and a minimum value of a transmission loss of the plurality of cores at a wavelength of 1550 nm is 0.005 dB/km or less.

*Fig.1*

## Description

### Technical Field

The present disclosure relates to a multicore optical fiber.

This application claims priority from Japanese Patent Application No. 2023-091573 filed on June 2, 2023, the entire contents of which are incorporated herein by reference.

### Background Art

In general, in a case where a core made of silica-based glass contains an alkali metal element or an alkaline-earth metal element, when manufacturing an optical fiber by drawing an optical fiber preform, since viscosity of the core is reduced, and rearrangement of glass is promoted, a transmission loss caused by Rayleigh scattering of the optical fiber is reduced. Hereinafter, both the alkali metal element and the alkaline-earth metal element are referred to as "alkali metal element group". Patent Literature 1 to Patent Literature 4 disclose an optical fiber in which a core made of silica-based glass contains the alkali metal element group.

In an uncoupled multicore optical fiber (hereinafter, referred to as "MCF"), it is important to reduce inter-core crosstalk (hereinafter, referred to as "XT"). Patent Literature 5 discloses an MCF in which the inter-core XT is reduced by providing a low-refractive-index portion between cores. Non-Patent Literature 1 discloses an MCF in which the inter-core XT is reduced by using a plurality of cores different in a propagation constant. Citation List

### Patent Literature

Patent Literature 1: Japanese Unexamined Patent Publication No. 2009-541796
Patent Literature 2: Japanese Unexamined Patent Publication No. 2017-40878
Patent Literature 3: Japanese Unexamined Patent Publication No. 2017-75061
Patent Literature 4: Japanese Unexamined Patent Publication No. 2017-161705
Patent Literature 5: International Publication WO 2017/033584

### Non Patent Literature

Non Patent Literature 1: M. Koshiba, K. Saitoh, and Y. Kokubun, "Heterogeneous multicore fibers: proposal and design principle," IEICE Electron. Express., vol. 6, no. 2, pp. 98 to 103, Jan. 2009.

## Summary of Invention

An MCF according to an aspect of the present disclosure is an MCF made of silica-based glass, and includes a plurality of cores containing one or more kinds of elements among an alkali metal element group consisting of an alkali metal element and alkaline-earth metal element, and a cladding that surrounds the plurality of cores, and has a refractive index lower than a refractive index of the plurality of cores. All adjacent first cores and second cores among the plurality of cores have refractive indexes different from each other, and a difference between a maximum value and a minimum value of a transmission loss of the plurality of cores at a wavelength of 1550 nm is 0.005 dB/km or less.

### Brief Description of Drawings

[FIG. 1] FIG. 1 is a view illustrating a cross-section orthogonal to a fiber axis of an MCF and a refractive index distribution according to an embodiment.
[FIG. 2] FIG. 2 is a flowchart illustrating a method for manufacturing the MCF according to the embodiment.
[FIG. 3] FIG. 3 is a table summarizing items of each MCF that has been manufactured and evaluated.
[FIG. 4] FIG. 4 is a graph showing a relationship between RFmax/RFmin and a transmission loss difference.
[FIG. 5] FIG. 5 is a table summarizing items of each MCF that has been manufactured and evaluated.
[FIG. 6] FIG. 6 is a graph showing a relationship between RCmax/RCmin and a transmission loss difference.

### Description of Embodiments

[Problem to be Solved by Present Disclosure]

In the MCF described in Non Patent Literature 1, as a means for adjusting a propagation constant, it is considered to change a halogen concentration for every core so as to change its refractive index. However, in the MCF containing the alkali metal element group, when changing the concentration of the halogen element for every core, there is a concern that a transmission loss may vary for every core due to concentration fluctuations, fictive temperatures, glass defects, and the like, and thus the transmission loss may vary for every core. In a case of using the MCF in a transmission path, when even one core with high transmission loss exists, a transmission distance of an optical communication system is limited due to the core.

An object of the present disclosure is to provide an MCF in which inter-core XT and a transmission loss difference between cores are reduced.

[Effects of Present Disclosure]

According to the present disclosure, it is possible to provide an MCF in which inter-core XT and a transmission loss difference between cores are reduced.

[Description of Embodiment of Present Disclosure]

First, the contents of an embodiment of the present disclosure will be listed and described.

(1) An MCF according to an aspect of the present disclosure is an MCF made of silica-based glass, and includes a plurality of cores containing one or more kinds of elements among an alkali metal element group consisting of an alkali metal element and alkaline-earth metal element, and a cladding that surrounds the plurality of cores, and has a refractive index lower than a refractive index of the plurality of cores. All adjacent first cores and second cores among the plurality of cores have refractive indexes different from each other, and a difference between a maximum value and a minimum value of a transmission loss of the plurality of cores at a wavelength of 1550 nm is 0.005 dB/km or less.
In the MCF, since the adjacent first cores and second cores have refractive indexes different from each other, the inter-core XT is reduced, and the transmission loss difference between cores is reduced.
(2) In (1), the all adjacent first cores and second cores among the plurality of cores may have a relative refractive index difference in which an absolute value of a difference between a relative refractive index difference of the first core with respect to the cladding and a relative refractive index difference of the second core with respect to the cladding is 0.01% or more. In this case, the inter-core XT is more reliably reduced.
(3) In (1) or (2), at least one of the all adjacent first cores and second cores among the plurality of cores may contain chlorine and fluorine so that a chlorine concentration is smaller than a fluorine concentration, and when a larger value between RF1 and RF2 is set as RFmax and a smaller value is set as RFmin in a case where a ratio $RF1 = CF1/CA1$ between a mass fraction CF1 of fluorine and a mass fraction CA1 of the alkali metal element group in the first core and a ratio $RF2 = CF2/CA2$ between a mass fraction CF2 of fluorine and a mass fraction CA2 of the alkali metal element group in the second core are different from each other, and RF1 is set as RFmax and RF2 is set as RFmin in a case where RF1 and RF2 are equal to each other, RFmax/RFmin may be 2.5 or less. In this case, it is possible to reduce the transmission loss difference between cores to 0.005 dB/km or less.
(4) In (3), RFmax/RFmin may be 2.0 or less. In this case, it is possible to reduce the transmission loss difference between cores to 0.004 dB/km or less.
(5) In (3), RFmax/RFmin may be 1.5 or less. In this case, it is possible to reduce the transmission loss difference between cores to 0.003 dB/km or less.
(6) In any one of (3) to (5), RFmax/RFmin may be 1.1 or more. In this case, it is possible to reduce an increase of the inter-core XT while reducing an increase in a transmission loss difference between cores.
(7) In any one of (3) to (6), a concentration of the alkali metal element group in each of the plurality of cores may be from 3 ppm to 300 ppm in terms of mass fraction. In this case, it is possible to reduce a transmission loss caused by Rayleigh scattering.
(8) In any one of (3) to (7), a fluorine concentration in each of the plurality of cores may be from 200 ppm to 2500 ppm in terms of mass fraction. In a case where the fluorine concentration is lower than 200 ppm, it is difficult to reduce a transmission loss due to concentration fluctuation in the transmission loss caused by Rayleigh scattering. In a case where the fluorine concentration is more than 2500 ppm, it is difficult to reduce the transmission loss due to concentration fluctuation in the transmission loss caused by Rayleigh scattering. When the fluorine concentration is set to from 200 ppm to 2500 ppm, it is possible to reduce the transmission loss caused by Rayleigh scattering.
(9) In (1) or (2), each of the plurality of cores may contain chlorine and fluorine so that a chlorine concentration is larger than a fluorine concentration, and when a larger value between RC1 and RC2 is set as RCmax and a smaller value is set as RCmin in a case where a ratio $RC1 = CC1/CA1$ between a mass fraction CC1 of chlorine and a mass fraction CA1 of the alkali metal element group in the first core and a ratio $RC2 = CC2/CA2$ between a mass fraction CC2 of chlorine and a mass fraction CA2 of the alkali metal element group in the second core are different from each other, and RC1 is set as RCmax and RC2 is set as RCmin in a case where RC1 and RC2 are equal to each other, RCmax/RCmin may be 2.5 or less. In this case, it is possible to reduce the transmission loss difference between cores to 0.005 dB/km or less.
(10) In (9), RCmax/RCmin may be 2.0 or less. In this case, it is possible to reduce the transmission loss difference between cores to 0.004 dB/km or less.
(11) In (9), RCmax/RCmin may be 1.5 or less. In this case, it is possible to reduce the transmission loss difference between cores to 0.003 dB/km or less.
(12) In any one of (9) to (11), RCmax/RCmin may be 1.1 or more. In this case, it is possible to reduce an increase in the inter-core XT while reducing an increase in the transmission loss difference between cores.
(13) In any one of (9) to (12), a concentration of the alkali metal element group in each of the plurality of cores may be from 3 ppm to 750 ppm in terms of mass fraction. In this case, it is possible to reduce the transmission loss caused by Rayleigh scattering.

(14) In any one of (9) to (13), a chlorine concentration in each of the plurality of cores may be more than 0 ppm and 12000 ppm or less in terms of mass fraction. In a case where the chlorine concentration is 0 ppm, it is difficult to reduce a transmission loss due to insufficient dehydration of a material that is used. In a case where the chlorine concentration is more than 12000 ppm, it is difficult to reduce a transmission loss due to concentration fluctuation in the transmission loss caused by Rayleigh scattering. When the chlorine concentration is set to more than 0 ppm and 12000 ppm or less, the transmission loss can be reduced.

(15) In any one of (1) to (14), each of the plurality of cores may contain one or more kinds of elements among sodium, potassium, rubidium, cesium, and calcium as the alkali metal element group. In this case, when manufacturing an optical fiber by drawing an optical fiber preform, since viscosity of a core is reduced, and rearrangement of glass is promoted, the transmission loss caused by Rayleigh scattering of the optical fiber can be reduced.

[Details of Embodiment of Present Disclosure]

Specific examples of the MCF of the present disclosure will be described below with reference to the accompanying drawings. It should be noted that the present invention is not limited to these examples, but is indicated by the scope of the claims and is intended to include all modifications within the meaning and scope equivalent to the scope of the claims. In the description of the drawings, the same elements are denoted by the same reference numerals, and redundant description will be omitted.

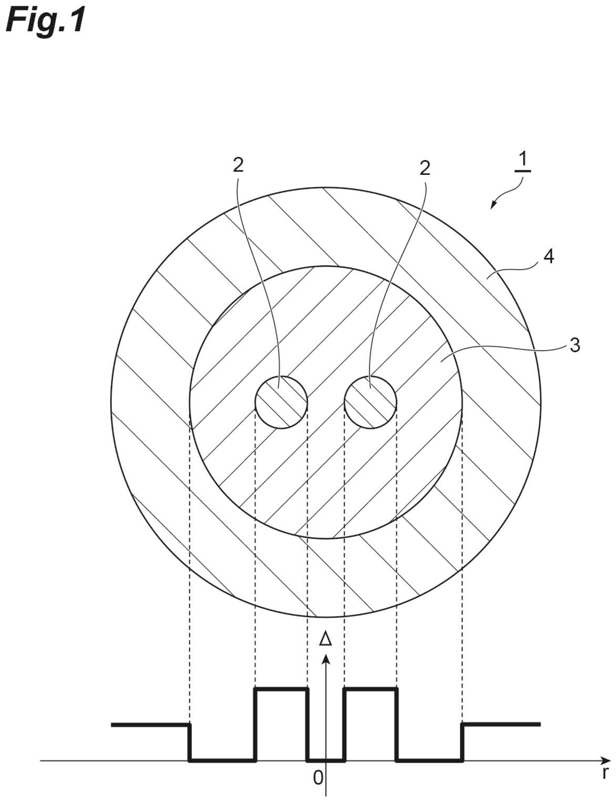

FIG. 1 is a view illustrating a cross-section orthogonal to a fiber axis of the MCF and a refractive index distribution according to an embodiment. As illustrated in FIG. 1, an MCF 1 according to the embodiment includes a plurality of cores 2, a first cladding 3, and a second cladding 4. MCF 1 is made of silica-based glass. MCF 1 has a simple structure that does not include a low-refractive-index portion such as a hole as described in Patent Literature 5. The silica-based glass is glass containing silica glass as a main component. A ratio of the silica glass as a main component may be 50% or more, 90% or more, 95% or more, 98% or more, or 99% or more in terms of mass ratio. Here, the mass ratio represents a mass fraction.

Plurality of cores 2 have the same circular shape on a cross-section orthogonal to the fiber axis. Core 2 extends along the fiber axis. A diameter (core diameter) of core 2 is, for example, from 8 $\mu$m to 15 $\mu$m. In this embodiment, MCF 1 is a two-core optical fiber, and the number of cores 2 is two, but there is no limitation thereto. On the cross-section orthogonal to the fiber axis, two cores 2 are disposed to face each other with a fiber center interposed therebetween. On the cross-section orthogonal to the fiber axis, two cores 2 are disposed at an equal distance from a central axis. On the cross-section orthogonal to the fiber axis, a distance between centers of two cores 2 is, for example, from 34 $\mu$m to 36 $\mu$m.

All adjacent first cores and second cores among plurality of cores 2 have refractive indexes different from each other. According to this, since the inter-core XT is reduced, a deterioration of the quality of optical communication is reduced. In this embodiment, the number of cores 2 is two, a combination of the first core and the second core adjacent to each other is one. In a case where two or more combinations exist, the first core and the second core in all combinations have refractive indexes different from each other. In the all adjacent first cores and second cores among plurality of cores 2, a difference in a relative refractive index difference is 0.01% or more. That is, a difference between a relative refractive index difference of the first cores and a relative refractive index difference of the second core is 0.01% or more. Cores 2 which are not adjacent to each other may have the same relative refractive index difference. The relative refractive index difference of the first cores and the relative refractive index difference of the second cores are relative refractive index differences with first cladding 3 set as a reference.

A difference between a maximum value and a minimum value of a transmission loss of plurality of cores 2 at a wavelength of 1550 nm, that is, a transmission loss difference between cores is 0.005 dB/km or less. The transmission loss difference between cores may be 0.004 dB/km or less, or 0.003 dB/km or less. In this embodiment, a transmission loss difference of two cores 2 at a wavelength of 1550 nm is the transmission loss difference between cores.

An average cut-off wavelength of plurality of cores 2 is, for example, from 1300 nm to 1530 nm. An average effective cross-sectional area of plurality of cores 2 at a wavelength of 1550 nm is, for example, from 75 $\mu$m$^2$ to 130 $\mu$m$^2$. The inter-core XT of two adjacent cores 2 at a wavelength of 1550 nm is, for example, -25 dB/100 km or less, and may be -40 dB/100 km or less. Here, the inter-core XT represents counter-propagation inter-core XT at a C-band region (from 1530 nm to 1565 nm). The counter-propagation inter-core XT is a logarithm of an intensity of light incident on a first end of the first core and returning to a first end of the second core to an intensity of light incident on the first end of the first core and emitted from a second end of the first core.

Each of plurality of cores 2 contains one or more kinds of element among an alkali metal element group consisting of an alkali metal element and an alkali-earth metal element. Each of plurality of cores 2 contains one or more kinds of elements among sodium, potassium, rubidium, cesium, and calcium as the alkali metal element group. The alkali metal element group may be contained in at least a part of core 2 in each of plurality of cores 2. Each of plurality of cores 2 contains a halogen element. Each of plurality of cores 2 contains chlorine and fluorine as the halogen element. Core 2 may further contain a halogen element other than chlorine and fluorine.

As an example, at least one of all adjacent first cores and second cores among plurality of cores 2 contains chlorine and fluorine to satisfy a relationship of chlorine concentration < fluorine concentration. In this case, when a larger value between RF1 and RF2 is set as RFmax and a smaller value is set as RFmin in a case where a ratio RF1 = CF1/CA1 between a fluorine concentration (mass fraction) CF1 and a concentration (mass fraction) CA1 of the alkali metal element group in each of the first cores and a ratio RF2 = CF2/CA2 between a fluorine concentration (mass fraction) CF2 and a concentration (mass fraction) CA2 of the alkali metal element group in each of the second cores are different from each other, and RF1 is set as RFmax and RF2 is set as RFmin in a case where RF1 and RF2 are equal to each other, RFmax/RFmin is 2.5 or less. RFmax/RFmin may be 2.0 or less or 1.5 or less, and 1.1 or more. In each of plurality of cores 2, the concentration of the alkali metal element group may be, for example, from 3 ppm to 300 ppm, or from 10 ppm to 200 ppm in terms of mass fraction. The fluorine concentration is, for example, from 1000 ppm to 2500 ppm in terms of mass fraction.

As an example, each of the plurality of cores contains chlorine and fluorine to satisfy a relationship of chlorine concentration > fluorine concentration. In this case, when a larger value between RC1 and RC2 is set as RCmax and a smaller value is set as RCmin in a case where a ratio RC1 = CC1/CA1 between a chlorine concentration (mass fraction) CC1 and a concentration (mass fraction) CA1 of the alkali metal element group in the first core and a ratio RC2 = CC2/CA2 between a chlorine concentration (mass fraction) CC2 and a concentration (mass fraction) CA2 of the alkali metal element group in the second core are different from each other, and RC1 is set as RCmax and RC2 is set as RCmin in a case where RC1 and RC2 are equal to each other, RCmax/RCmin is 2.5 or less. RCmax/RCmin may be 2.0 or less or 1.5 or less, and 1.1 or more. In each of plurality of cores 2, the concentration of the alkali metal element group is, for example, from 3 ppm to 750 ppm, and may be from 10 ppm to 500 ppm in terms of mass fraction. The fluorine concentration is, for example, more than 0 ppm and 4000 ppm or less in terms of mass fraction.

A method for measuring a concentration of the elements contained in core 2 is, for example, as follows. An end surface of MCF 1 which is orthogonal to the fiber axis is polished, and on the end surface, a concentration C(x) at a radial position x of an element that is set as a measurement target is measured along a straight line passing through a central position of core 2 by an electron probe micro analyzer (EPMA). The radial position x is 0 at the center of core 2. Here, as measurement conditions by the EPMA, for example, an acceleration voltage is 20 kV, a probe beam diameter is 1 $\mu$m or less, and a measurement interval is 100 nm or less. When a radius of core 2 is set as "a", an average concentration of the element set as a measurement target over the entirety of core 2 is expressed by the following expression. Note that, in a case where core 2 contains two or more kinds of elements in the alkali metal element group, the sum of average concentrations obtained by setting respective elements as a measurement target is set as an average concentration of the alkali metal element group.

**[Mathematical Formula 1]**

$$\frac{2\int_0^a C(x) \cdot x \cdot dx}{a^2}$$

First cladding 3 and second cladding 4 are common claddings surrounding plurality of cores 2. First cladding 3 covers an outer peripheral surface of plurality of cores 2. On a cross-section orthogonal to the fiber axis, first cladding 3 has a circular shape. A diameter of first cladding 3 is, for example, from 65 $\mu$m to 80 $\mu$m. Second cladding 4 covers an outer peripheral surface of first cladding 3. On a cross-section orthogonal to the fiber axis, second cladding 4 has a circular shape. A diameter of second cladding 4 is, for example, from 124 $\mu$m to 126 $\mu$m.

First cladding 3 and second cladding 4 have a refractive index lower than a refractive index of core 2. A refractive index of the second cladding 4 is higher than a refractive index of first cladding 3. In a state in which the refractive index of first cladding 3 is set as a reference, a relative refractive index difference of second cladding 4 is from 0.05% to 0.20%, and a relative refractive index difference of core 2 is from 0.25% to 0.40%. In a refractive index distribution in FIG. 1, the vertical axis represents a relative refractive index difference $\Delta$ with the refractive index of first cladding 3 set as a reference, and the horizontal axis represents a radial position r. The radial position r is 0 at a fiber center. MCF 1 is a common depressed type MCF. First cladding 3 functions as a common depressed cladding.

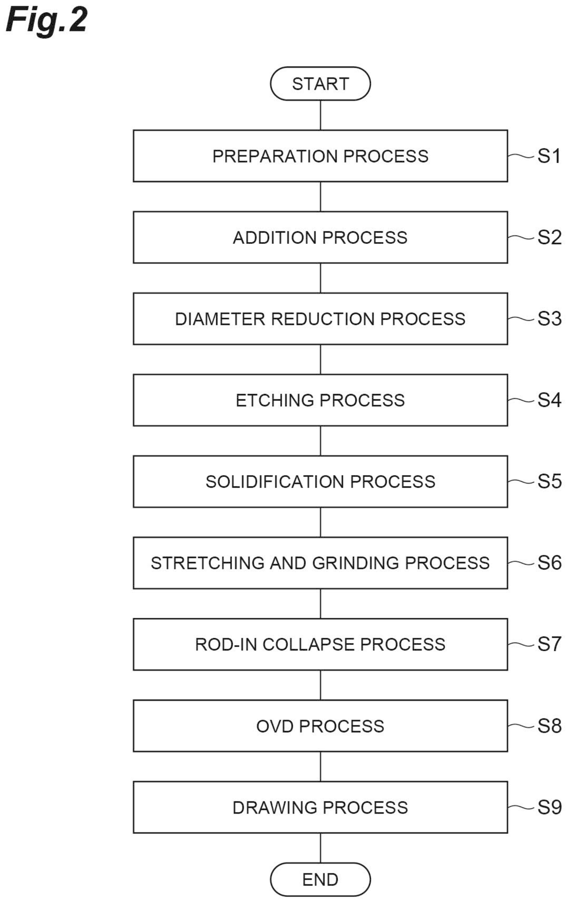

FIG. 2 is a flowchart illustrating a method for manufacturing the MCF according to the embodiment. As illustrated in FIG. 2, an example of specific conditions is also described in the following description. As illustrated in FIG. 2, MCF 1 is manufactured sequentially through a preparation process (step S1), an addition process (step S2), a diameter reduction process (step S3), an etching process (step S4), a solidification process (step S5), a stretching and grinding process (step S6), a rod-in collapse process (step S7), an OVD process (step S8), and a drawing process (step S9).

In the preparation process (step S1), a glass pipe of silica-based glass into which a dopant such as an alkali metal element is to be diffused is prepared. A ratio of silica glass as a main component may be 50% or more, 90% or more, 95% or more, 98% or more, or 99% or more in terms of mass ratio. Here, the mass ratio represents a mass fraction. This is also true of silica-based glass to be described later. An outer diameter of the glass pipe is from 30 mm to 40 mm, and an inner diameter is from 15 mm to 25 mm. A cylindrical body of the silica-based glass that is the base of the glass pipe contains chlorine and fluorine. A concentration of chlorine and fluorine contained in the cylindrical body is equal to a concentration of chlorine and fluorine contained in core 2 of MCF 1. A concentration of other dopants and impurities contained in the cylindrical body is 10 ppm or less. The concentration stated here is an average concentration of the entirety of the cylindrical body. A concentration of elements contained in the cylindrical body is measured, for example, by the EPMA in a similar manner to in the concentration of the elements contained in core 2. Measurement conditions may be different from the case of core 2. There is no problem as long as the concentration is calculated by using a calibration curve in each condition.

In the addition process (step S2), a dopant of the alkali metal element group is added to an inner surface of the prepared glass pipe. Here, description will be given of a case of adding a potassium element. From 6 g to 50 g of potassium bromide (KBr) is used as a raw material. The raw material is heated to a temperature of from 750°C to 850°C by an external heat source to generate a raw material vapor. The glass pipe is heated from the outside by an oxyhydrogen burner so that an outer surface of the glass pipe reaches a temperature from 1400°C to 2000°C while flowing the raw material vapor to the inside of the glass pipe in combination with a carrier gas containing oxygen in a flow rate of 1 SLM (1 liter/min in terms of standard state). At this time, the heating is performed by traversing the burner at a speed from 30 mm/min to 60 mm/min for a total of from 5 turns to 20 turns, and the potassium element is diffused and added to the inner surface of the glass pipe.

In the diameter reduction process (step S3), a diameter of the glass pipe to which the potassium element is added is reduced. At this time, the glass pipe is heated by an external heat source so that the outer surface of the glass pipe reaches from 1400°C to 2300°C while flowing oxygen to the inside of the glass pipe at a flow rate of from 0.5 SLM to 1.0 SLM. The diameter reduction is performed until the inner diameter of the glass pipe becomes from 3 mm to 8 mm by traversing the external heat source for a total of from 5 turns to 15 turns for heating the glass pipe.

In the etching process (step S4), the inner surface of the glass pipe is etched. At this time, vapor phase etching is performed by heating the glass pipe with the external heat source while flowing a mixed gas of $SF_6$ (from 0.2 SLM to 1.0 SLM) and chlorine (from 0.5 SLM to 1.0 SLM) to the inside of the glass pipe. According to this, the inner surface of the glass pipe to which a high-concentration dopant is added in combination with a desired impurity can be scraped, and the impurity can be removed.

In the solidification process (step S5), the glass pipe is solidified. In the solidification process, a single or mixed gas of oxygen (from 0.1 SLM to 0.5 SLM) and He (from 0.5 SLM to 1.0 SLM) flows to the inside of the glass pipe, and the glass pipe is solidified by setting a surface temperature to from 2000°C to 2300°C while lowering an absolute pressure inside the glass pipe to a pressure of 97 kPa or lower. As a result of the solidification, a glass rod (outer diameter of from 20 mm to 30 mm) serving as a core portion is obtained. A core layer that does not contain the alkali metal element group may be applied to an outer side of the glass rod by a known method such as an outside vapor deposition (OVD) method or a collapse method.

In the stretching and grinding process (step S6), the glass rod serving as the core portion is stretched to a diameter of from 15 mm to 25 mm, and an outer peripheral portion of the glass rod is further ground to a diameter of from 15 mm to 25 mm, thereby obtaining the core portion. However, a diameter immediately after elongation is set to be larger than a diameter immediately after grinding. From the preparation process to the stretching and grinding process are performed for the number of cores 2 of MCF 1 to obtain a plurality of the core portions. Each of the core portions is a portion serving as core 2 of MCF 1.

In the rod-in collapse process (step S7), a first cladding portion is provided on an outer side of each of the plurality of core portions. The first cladding portion is a portion serving as first cladding 3 of MCF 1. The plurality of core portions are inserted into the silica-based glass pipe to which fluorine is added, and the rod-in collapse is performed. According to the rod-in collapse method, the plurality of core portions and the silica-based glass pipe to which fluorine is added are heated by an external heat source and are integrated. According to this, the first cladding portion 1 is applied to the periphery of the plurality of core portions. A difference of the relative refractive index difference between the core portions and the first cladding portion is approximately from 0.30% to 0.45% to the maximum. As a result of synthesis by the rod-in collapse method, it is possible sufficiently lower the amount of moisture of the core portions and the first cladding portion in the vicinity of the core portions. A structure of MCF 1 can be determined by an insertion position of the core portions and the number of the inserted core portions in the process. The rod-in collapse method is also referred to as rod-in-tube method.

In the OVD process (step S8), the rod in which the plurality of core portions and the first cladding portions are integrated with each other is stretched to a predetermined diameter, and a second cladding portion containing fluorine is synthesized to an outer side of the rod by the OVD method. According to this, an optical fiber preform is manufactured. The second cladding portion is a portion serving as second cladding 4 of MCF 1.

In the drawing process (step S9), the optical fiber preform is drawn to manufacture MCF 1. A drawing speed is from 600 m/min to 2300 m/min. A drawing tension is from 0.1 N to 1.0 N.

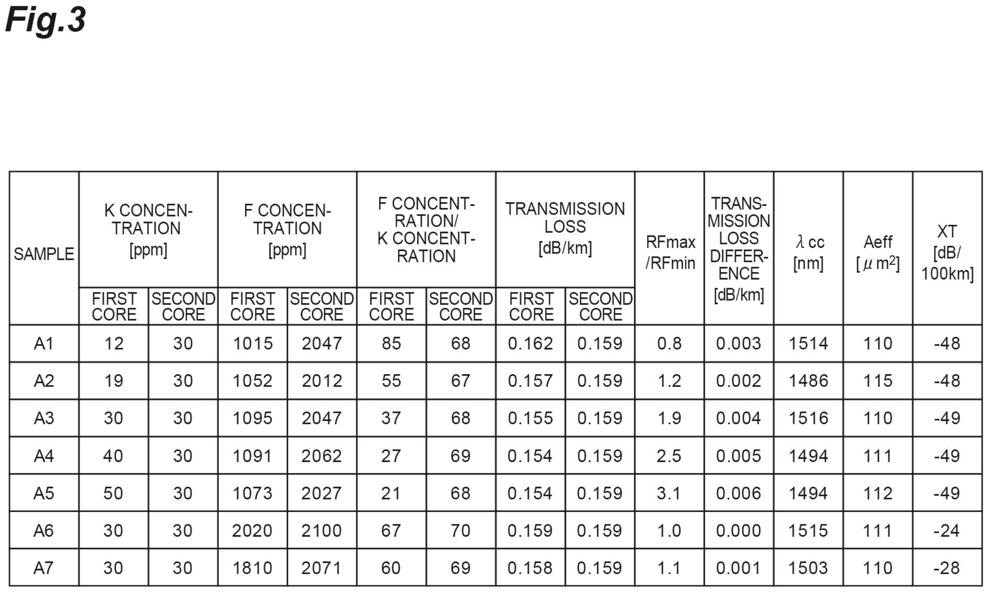

FIG. 3 is a table summarizing items of each MCF that has been manufactured and evaluated. Each of MCFs in FIG. 3 is a two-core optical fiber including two cores. FIG. 3 shows a potassium concentration (K concentration) [ppm] in the first core and the second core, a fluorine concentration (F concentration) [ppm] in the first core and the second core, a ratio of the fluorine concentration to the potassium concentration (F concentration/K concentration) in the first core and the second core, a transmission loss [dB/km] of the first core and the second core at a wavelength of 1550 nm, RFmax/RFmin, a transmission loss difference [dB/km], a cutoff wavelength ($\lambda$cc) [nm], an effective cross-sectional area (Aeff) [$\mu$m$^2$] at a wavelength of 1550 nm, and the inter-core XT [dB/100 km] at a wavelength of 1550 nm for each of the MCFs of Sample A1 to Sample A7.

As described above, when F concentration/K concentration in the first core is set as RF1 and F concentration/K concentration in the second core is set as RF2, in a case where RF1 and RF2 are different from each other, RFmax corresponds to a larger value between RF1 and RF2, and in a case where RF1 and RF2 are equal to each other, RFmax corresponds to RF1. In a case where RF1 and RF2 are different from each other, RFmin corresponds to a smaller value between RF1 and RF2, and in a case where RF1 and RF2 are equal to each other, RFmin corresponds to RF2.

The transmission loss difference is a difference between a maximum value and a minimum value of the transmission loss of the plurality of cores at a wavelength of 1550 nm, and in this example, the transmission loss difference corresponds to a difference between a transmission loss of the first core at a wavelength of 1550 nm, and a transmission loss of the second core at a wavelength of 1550 nm. The cutoff wavelength is an average value of cutoff wavelengths of the plurality of cores, and in this example, the cutoff wavelength is an average value of cutoff wavelengths of the first core and the second core. The effective cross-sectional area at a wavelength of 1550 nm is an average value of effective cross-sectional areas of the plurality of cores at a wavelength of 1550 nm, and in this example, the effective cross-sectional area is an average value of effective cross-sectional areas of the first core and the second core at a wavelength of 1550 nm.

In the MCFs of Sample A1 to Sample A7, the cutoff wavelength of the second core was a value within $\pm$5% of the cutoff wavelength of the first core. A distance between centers of the first core and the second core was 35 $\mu$m $\pm$ 1 $\mu$m. The first core and the second core contained chlorine and fluorine as the halogen element, but the present inventors found through thorough investigation that in a case where a relationship of the chlorine concentration < the fluorine concentration is satisfied in at least one of the first core and the second core, the focus may be given to the fluorine concentration. Accordingly, the table in FIG. 3 is created with focus given to the fluorine concentration. Chlorine is co-added to the first core in a concentration of from 500 ppm to 3000 ppm. Chlorine is co-added to the second core in a concentration of from 500 ppm to 2000 ppm.

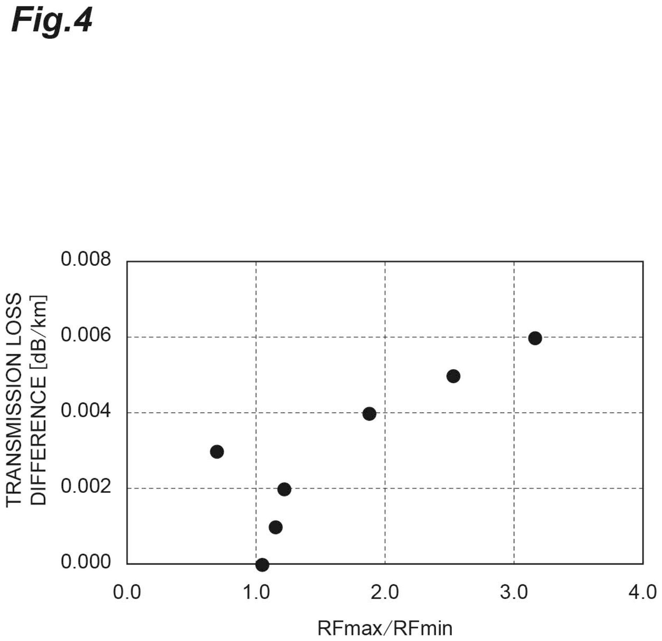

FIG. 4 is a graph showing a relationship between RFmax/RFmin and the transmission loss difference. As shown in FIG. 4, a correlation is shown between RFmax/RFmin and the transmission loss difference. When RFmax/RFmin is less than 3, the transmission loss difference between cores decreases to 0.005 dB/km or less. On the other hand, as shown in FIG. 3, when RFmax/RFmin becomes 1.1 or less, there is a concern that the inter-core XT may increase. When the inter-core XT increases, there is a possibility that the quality of optical communication may deteriorate. However, it can be confirmed from Sample A1 that when RFmax/RFmin falls below 1.0, the transmission loss difference is turned to increase.

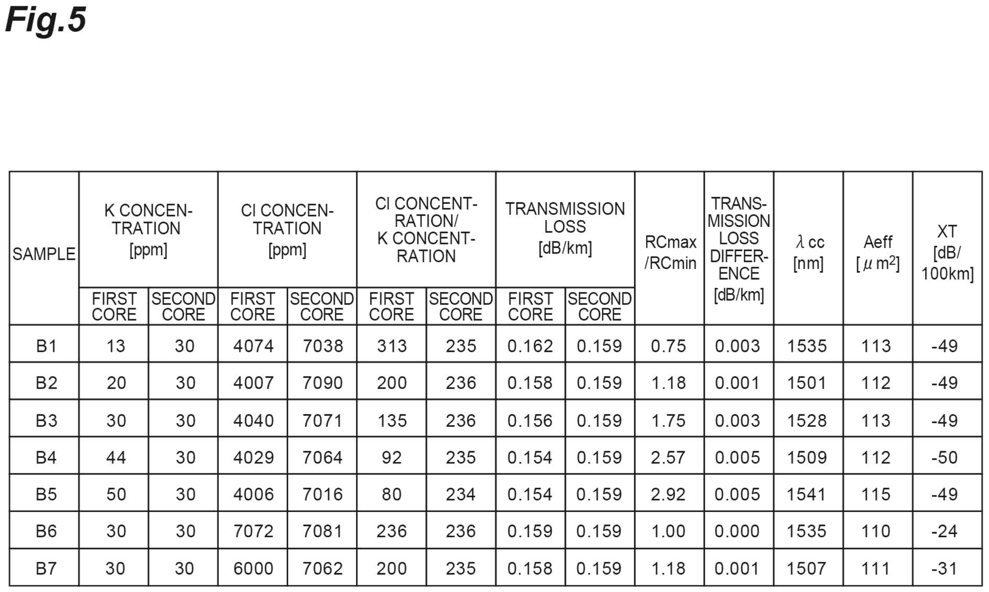

FIG. 5 is a table summarizing items of each MCF that has been manufactured and evaluated. Each of MCFs in FIG. 5 is a two-core optical fiber including two cores. FIG. 5 shows a potassium concentration (K concentration) [ppm] in the first core and the second core, a chlorine concentration (Cl concentration) [ppm] in the first core and the second core, a ratio of the chlorine concentration to the potassium concentration (Cl concentration/K concentration) in the first core and the second core, a transmission loss [dB/km] of the first core and the second core at a wavelength of 1550 nm, RCmax/RCmin, a transmission loss difference [dB/km], a cutoff wavelength ($\lambda$cc) [nm], an effective cross-sectional area (Aeff) [$\mu$m$^2$] at a wavelength of 1550 nm, and the inter-core XT [dB/100 km] at a wavelength of 1550 nm for each of the MCFs of Sample B1 to Sample B7.

As described above, when C1 concentration/K concentration in the first core is set as RC1 and Cl concentration/K concentration in the second core is set as RC2, in a case where RC1 and RC2 are different from each other, RCmax corresponds to a larger value between RC1 and RC2, and in a case where RC1 and RC2 are equal to each other, RCmax corresponds to RC1. In a case where RC1 and RC2 are different from each other, RCmin corresponds to a smaller value between RC1 and RC2, and in a case where RC1 and RC2 are equal to each other, RCmin corresponds to RC2.

In the MCFs of Sample B1 to Sample B7, the cutoff wavelength of the second core was a value within $\pm$5% of the cutoff wavelength of the first core. A distance between centers of the first core and the second core was 35 $\mu$m $\pm$ 1 $\mu$m. The first core and the second core contain chlorine and fluorine as the halogen element, but since in any of the first core and the second core, a relationship of the chlorine concentration > the fluorine concentration is satisfied, the table in FIG. 5 is created with focus given to the chlorine concentration that has a large contribution. Fluorine is co-added to the first core and the second core at a concentration of more than 0 ppm and 4000 ppm or less.

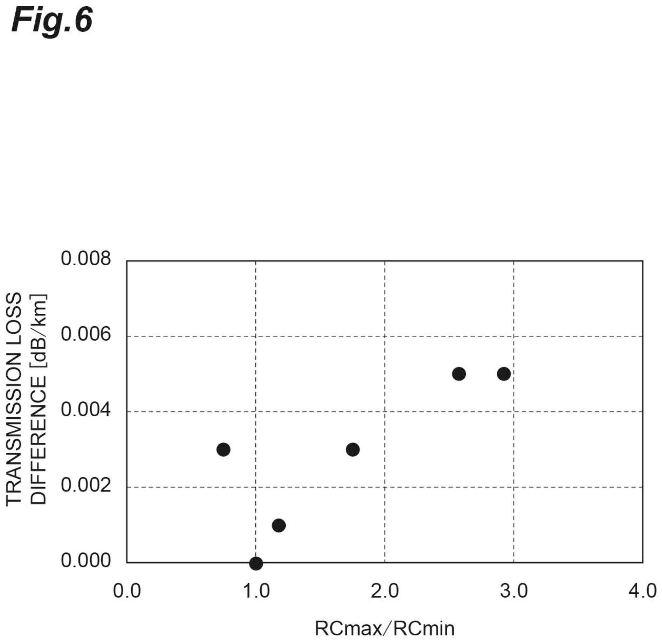

FIG. 6 is a graph showing a relationship between RCmax/RCmin and a transmission loss difference. As shown in FIG. 6, a correlation is shown between RCmax/RCmin and the transmission loss difference. When RCmax/RCmin is less than 2.5, the transmission loss difference between cores decreases to 0.005 dB/km or less. On the other hand, as shown in FIG. 5, when RCmax/RCmin becomes smaller than 1.1, there is a concern that the inter-core XT may increase. When the inter-core XT increases, there is a possibility that the quality of optical communication may deteriorate. However, it can be confirmed from Sample B1 that when RCmax/RCmin becomes smaller than 1.0, the transmission loss difference is turned to increase.

Hereinbefore, description has been given of the embodiment, but the present disclosure is not limited to the embodiment and the modification example, and various modifications can be made within a range not departing from the gist.

For example, two adjacent cores 2 among plurality of cores 2 may have shapes different from each other. For example, two adjacent cores 2 may have diameters different from each other.

**Reference Signs List**

1: multicore optical fiber, 2: core, 3: first cladding, 4: second cladding.

**Claims**

1. A multicore optical fiber made of silica-based glass, comprising:

   a plurality of cores containing one or more kinds of elements among an alkali metal element group consisting of an alkali metal element and alkaline-earth metal element; and
   a cladding that surrounds the plurality of cores, and has a refractive index lower than a refractive index of the plurality of cores,
   wherein all adjacent first cores and second cores among the plurality of cores have refractive indexes different from each other, and
   a difference between a maximum value and a minimum value of a transmission loss of the plurality of cores at a wavelength of 1550 nm is 0.005 dB/km or less.

2. The multicore optical fiber according to claim 1, wherein the all adjacent first cores and second cores among the plurality of cores have a relative refractive index difference in which an absolute value of a difference between a relative refractive index difference of the first core with respect to the cladding and a relative refractive index difference of the second core with respect to the cladding is 0.01% or more.

3. The multicore optical fiber according to claim 1 or 2,

   wherein at least one of the all adjacent first cores and second cores among the plurality of cores contains chlorine and fluorine so that a chlorine concentration is smaller than a fluorine concentration, and
   when a larger value between RF1 and RF2 is set as RFmax and a smaller value is set as RFmin in a case where a ratio RF1 = CF1/CA1 between a mass fraction CF1 of fluorine and a mass fraction CA1 of the alkali metal element group in the first core and a ratio RF2 = CF2/CA2 between a mass fraction CF2 of fluorine and a mass fraction CA2 of the alkali metal element group in the second core are different from each other, and RF1 is set as RFmax and RF2 is set as RFmin in a case where RF1 and RF2 are equal to each other, RFmax/RFmin is 2.5 or less.

4. The multicore optical fiber according to claim 3, wherein RFmax/RFmin is 2.0 or less.

5. The multicore optical fiber according to claim 3, wherein RFmax/RFmin is 1.5 or less.

6. The multicore optical fiber according to any one of claims 3 to 5,
   wherein RFmax/RFmin is 1.1 or more.

7. The multicore optical fiber according to any one of claims 3 to 6,
   wherein a concentration of the alkali metal element group in each of the plurality of cores is from 3 ppm to 300 ppm in terms of mass fraction.

8. The multicore optical fiber according to any one of claims 3 to 7,
   wherein a fluorine concentration in each of the plurality of cores is from 200 ppm to 2500 ppm in terms of mass fraction.

9. The multicore optical fiber according to claim 1 or 2,

   wherein each of the plurality of cores contains chlorine and fluorine so that a chlorine concentration is larger than a fluorine concentration, and
   when a larger value between RC1 and RC2 is set as RCmax and a smaller value is set as RCmin in a case where a ratio RC1 = CC1/CA1 between a mass fraction CC1 of chlorine and a mass fraction CA1 of the alkali metal element group in the first core and a ratio RC2 = CC2/CA2 between a mass fraction CC2 of chlorine and a mass fraction CA2 of the alkali metal element group in the second core are different from each other, and RC1 is set as RCmax and RC2 is set as RCmin in a case where RC1 and RC2 are equal to each other, RCmax/RCmin is 2.5 or less.

10. The multicore optical fiber according to claim 9, wherein RCmax/RCmin is 2.0 or less.

11. The multicore optical fiber according to claim 9, wherein RCmax/RCmin is 1.5 or less.

12. The multicore optical fiber according to any one of claims 9 to 11,
wherein RCmax/RCmin is 1.1 or more.

13. The multicore optical fiber according to any one of claims 9 to 12,
wherein a concentration of the alkali metal element group in each of the plurality of cores is from 3 ppm to 750 ppm in terms of mass fraction.

14. The multicore optical fiber according to any one of claims 9 to 13,
wherein a chlorine concentration in each of the plurality of cores is more than 0 ppm and 12000 ppm or less in terms of mass fraction.

15. The multicore optical fiber according to any one of claims 1 to 14,
wherein each of the plurality of cores contains one or more kinds of elements among sodium, potassium, rubidium, cesium, and calcium as the alkali metal element group.

*Fig.1*

# Fig.2

```
           ┌─────────┐
           │  START  │
           └────┬────┘
                │
    ┌───────────────────────┐
    │  PREPARATION PROCESS   │── S1
    └───────────┬───────────┘
                │
    ┌───────────────────────┐
    │   ADDITION PROCESS     │── S2
    └───────────┬───────────┘
                │
    ┌───────────────────────┐
    │ DIAMETER REDUCTION     │── S3
    │      PROCESS           │
    └───────────┬───────────┘
                │
    ┌───────────────────────┐
    │   ETCHING PROCESS      │── S4
    └───────────┬───────────┘
                │
    ┌───────────────────────┐
    │ SOLIDIFICATION PROCESS │── S5
    └───────────┬───────────┘
                │
    ┌───────────────────────┐
    │ STRETCHING AND         │── S6
    │ GRINDING PROCESS       │
    └───────────┬───────────┘
                │
    ┌───────────────────────┐
    │ ROD-IN COLLAPSE        │── S7
    │      PROCESS           │
    └───────────┬───────────┘
                │
    ┌───────────────────────┐
    │    OVD PROCESS         │── S8
    └───────────┬───────────┘
                │
    ┌───────────────────────┐
    │  DRAWING PROCESS       │── S9
    └───────────┬───────────┘
                │
           ┌─────────┐
           │   END   │
           └─────────┘
```

# Fig.3

| SAMPLE | K CONCEN-TRATION [ppm] | | F CONCEN-TRATION [ppm] | | F CONCENT-RATION/ K CONCENT-RATION | | TRANSMISSION LOSS [dB/km] | | RFmax/RFmin | TRANS-MISSION LOSS DIFFER-ENCE [dB/km] | $\lambda$ cc [nm] | Aeff [$\mu$ m2] | XT [dB/100km] |
|---|---|---|---|---|---|---|---|---|---|---|---|---|---|
| | FIRST CORE | SECOND CORE | FIRST CORE | SECOND CORE | FIRST CORE | SECOND CORE | FIRST CORE | SECOND CORE | | | | | |
| A1 | 12 | 30 | 1015 | 2047 | 85 | 68 | 0.162 | 0.159 | 0.8 | 0.003 | 1514 | 110 | -48 |
| A2 | 19 | 30 | 1052 | 2012 | 55 | 67 | 0.157 | 0.159 | 1.2 | 0.002 | 1486 | 115 | -48 |
| A3 | 30 | 30 | 1095 | 2047 | 37 | 68 | 0.155 | 0.159 | 1.9 | 0.004 | 1516 | 110 | -49 |
| A4 | 40 | 30 | 1091 | 2062 | 27 | 69 | 0.154 | 0.159 | 2.5 | 0.005 | 1494 | 111 | -49 |
| A5 | 50 | 30 | 1073 | 2027 | 21 | 68 | 0.154 | 0.159 | 3.1 | 0.006 | 1494 | 112 | -49 |
| A6 | 30 | 30 | 2020 | 2100 | 67 | 70 | 0.159 | 0.159 | 1.0 | 0.000 | 1515 | 111 | -24 |
| A7 | 30 | 30 | 1810 | 2071 | 60 | 69 | 0.158 | 0.159 | 1.1 | 0.001 | 1503 | 110 | -28 |

## Fig.4

# Fig.5

| SAMPLE | K CONCEN-TRATION [ppm] | | Cl CONCEN-TRATION [ppm] | | Cl CONCENT-RATION/ K CONCENT-RATION | | TRANSMISSION LOSS [dB/km] | | RCmax /RCmin | TRANS-MISSION LOSS DIFFER-ENCE [dB/km] | $\lambda$ cc [nm] | Aeff [$\mu$ m²] | XT [dB/ 100km] |
|--------|------------|-------------|------------|-------------|------------|-------------|------------|-------------|------|-------|------|------|------|
| | FIRST CORE | SECOND CORE | FIRST CORE | SECOND CORE | FIRST CORE | SECOND CORE | FIRST CORE | SECOND CORE | | | | | |
| B1 | 13 | 30 | 4074 | 7038 | 313 | 235 | 0.162 | 0.159 | 0.75 | 0.003 | 1535 | 113 | -49 |
| B2 | 20 | 30 | 4007 | 7090 | 200 | 236 | 0.158 | 0.159 | 1.18 | 0.001 | 1501 | 112 | -49 |
| B3 | 30 | 30 | 4040 | 7071 | 135 | 236 | 0.156 | 0.159 | 1.75 | 0.003 | 1528 | 113 | -49 |
| B4 | 44 | 30 | 4029 | 7064 | 92 | 235 | 0.154 | 0.159 | 2.57 | 0.005 | 1509 | 112 | -50 |
| B5 | 50 | 30 | 4006 | 7016 | 80 | 234 | 0.154 | 0.159 | 2.92 | 0.005 | 1541 | 115 | -49 |
| B6 | 30 | 30 | 7072 | 7081 | 236 | 236 | 0.159 | 0.159 | 1.00 | 0.000 | 1535 | 110 | -24 |
| B7 | 30 | 30 | 6000 | 7062 | 200 | 235 | 0.158 | 0.159 | 1.18 | 0.001 | 1507 | 111 | -31 |

*Fig.6*

## INTERNATIONAL SEARCH REPORT

| International application No. |
| --- |
| **PCT/JP2024/016999** |

**A. CLASSIFICATION OF SUBJECT MATTER**

*G02B 6/02*(2006.01)i
FI: G02B6/02 461

According to International Patent Classification (IPC) or to both national classification and IPC

**B. FIELDS SEARCHED**

Minimum documentation searched (classification system followed by classification symbols)

G02B6/02-6/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2022/097639 A1 (SUMITOMO ELECTRIC INDUSTRIES LTD.) 12 May 2022 (2022-05-12)<br>paragraphs [0009], [0019], [0023]-[0025], [0035]-[0036], [0049]-[0051], [0057]-[0058], fig. 1, 5, table 2 | 1-15 |
| Y | JP 2016-82318 A (NIPPON TELEGRAPH & TELEPHONE) 16 May 2016 (2016-05-16)<br>paragraph [0005] | 1-15 |
| Y | WO 2013/129234 A1 (SUMITOMO ELECTRIC INDUSTRIES LTD.) 06 September 2013 (2013-09-06)<br>paragraph [0015] | 1-15 |
| Y | WO 2020/027063 A1 (SUMITOMO ELECTRIC INDUSTRIES LTD.) 06 February 2020 (2020-02-06)<br>paragraphs [0009], [0029]-[0031], fig. 2 | 1-15 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 June 2024** | **02 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/016999**

### C. DOCUMENTS CONSIDERED TO BE RELEVANT

| Category* | Citation of document, with indication, where appropriate, of the relevant passages | Relevant to claim No. |
|---|---|---|
| Y | WO 2017/195834 A1 (SUMITOMO ELECTRIC INDUSTRIES LTD.) 16 November 2017 (2017-11-16) paragraph [0025] | 1-15 |
| Y | WO 2019/172197 A1 (SUMITOMO ELECTRIC INDUSTRIES LTD.) 12 September 2019 (2019-09-12) paragraph [0027] | 1-15 |
| P, A | JP 2023-135785 A (THE FURUKAWA ELECTRIC CO., LTD.) 29 September 2023 (2023-09-29) paragraph [0027] | 1-15 |
| A | US 2021/0055490 A1 (CORNING INCORPORATED) 25 February 2021 (2021-02-25) paragraph [0030] | 1-15 |

Form PCT/ISA/210 (second sheet) (July 2022)

## INTERNATIONAL SEARCH REPORT
### Information on patent family members

| International application No. |
| --- |
| **PCT/JP2024/016999** |

| Patent document cited in search report | | | Publication date (day/month/year) | Patent family member(s) | | | Publication date (day/month/year) |
| --- | --- | --- | --- | --- | --- | --- | --- |
| WO | 2022/097639 | A1 | 12 May 2022 | US 2023/0288631 A1 paragraphs [0017], [0027], [0031]-[0033], [0041]-[0042], [0054]-[0055], [0061]-[0062], fig. 1, 5, table 2 EP 4242710 A1 CN 116324545 A | | | |
| JP | 2016-82318 | A | 16 May 2016 | (Family: none) | | | |
| WO | 2013/129234 | A1 | 06 September 2013 | US 2013/0251320 A1 paragraph [0016] EP 2821823 A1 CN 104145198 A | | | |
| WO | 2020/027063 | A1 | 06 February 2020 | US 2021/0171390 A1 paragraphs [0008], [0042]-[0043], fig. 2 CN 112469676 A | | | |
| WO | 2017/195834 | A1 | 16 November 2017 | US 2019/0041574 A1 paragraph [0032] EP 3457184 A1 CN 109073824 A | | | |
| WO | 2019/172197 | A1 | 12 September 2019 | US 2020/0393613 A1 paragraph [0040] EP 3764134 A1 CN 111801609 A | | | |
| JP | 2023-135785 | A | 29 September 2023 | (Family: none) | | | |
| US | 2021/0055490 | A1 | 25 February 2021 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023091573 A
- JP 2009541796 A
- JP 2017040878 A
- JP 2017075061 A
- JP 2017161705 A
- WO 2017033584 A

**Non-patent literature cited in the description**

- **M. KOSHIBA ; K. SAITOH ; Y. KOKUBUN**. Heterogeneous multicore fibers: proposal and design principle. *IEICE Electron. Express.*, January 2009, vol. 6 (2), 98-103